# FASCICULE DE BREVET EUROPEEN

(11) **EP 0 628 235 B1**
(45) Date de publication et mention de la délivrance du brevet: **12.03.1997**
(21) Numéro de dépôt: 93911665.3
(22) Date de dépôt: 30.12.1992
(51) Int. Cl.: H05H 1/12, F28F 7/02, G21B 1/00

(54) **PROCEDE DE FORMATION D'UN PASSAGE ETANCHE DANS UNE PIECE EN MATERIAU COMPOSITE REFRACTAIRE, ET APPLICATION A LA REALISATION D'UNE STRUCTURE EN MATERIAU COMPOSITE REFRACTAIRE REFROIDIE PAR CIRCULATION DE FLUIDE**
VERFAHREN ZUR ERZEUGUNG EINER ABGEDICHTEN DURCHFÜHRUNG IN EINEM FEUERFESTEN VERBUNDSTÜCK UND ANWENDUNG AUF DER HERSTELLUNG EINER DURCH FLÜSSIGKEITSUMLAUF GEKÜHLTEN FEUERFESTEN VERBUNDSTRUKTUR
METHOD FOR MAKING A SEALED PASSAGE IN A REFRACTORY COMPOSITE PART, AND APPLICATION TO THE PRODUCTION OF A REFRACTORY COMPOSITE STRUCTURE COOLED BY FLUID CIRCULATION

(30) Priorité: 31.12.1991 FR 9116390
(43) Date de publication de la demande: 14.12.1994
(73) Titulaire: SOCIETE EUROPEENNE DE PROPULSION, 92150 Suresnes (FR)
(72) Inventeur: FILIPUZZI, Ludovic, F-33400 Talence (FR); HUET, Philippe Lieu dit "Le Pez", F-33460 Margaux (FR)
(74) Mandataire: Joly, Jean-Jacques
(86) Numéro de dépôt international: FR9201243
(87) Numéro de publication internationale: WO9313636

(56) Documents cités:
- EP-A- 0 250 345
- US-A- 5 023 043
- FUSION ENGINEERING & DESIGN vol. 18, no. 1/4, December 1991, AMSTERDAM NL pages 99 - 104, XP244249 AKIBA ET AL 'Development of plasma facing components at JAERI'
- FUSION ENGINEERING & DESIGN vol. 9, no. 1, May 1989, AMSTERDAM, NL pages 63 - 68 FRANCONI ET AL. 'Joint ENEA-ANSALDO design and manufacturing feasibility study of a brazed first wall for NET'
- FUSION ENGINEERING & DESIGN vol. 11, no. 1/2, July 1989, AMSTERDAM, NL pages 125 - 137 VIEIDER ET AL. 'NET plasma facing components'
- FUSION TECHNOLOGY. vol. 13, no. 3, March 1988, LAGRANGE PARK, ILLINOIS US pages 473 - 483 RENDA ET AL. 'Feasibility study for an engineering concept of a stainless steel/copper divertor plate protected by W-5Re alloy or graphite armor'
- FUSION ENGINEERING AND DESIGN vol. 15, no. 1, July 1991, AMSTERDAM, NL pages 31 - 38 , XP225759 IOKI ET AL. 'Development of high conductive C/C composite tiles for plasma facing armor'

## Description

La présente invention concerne la formation d'un passage étanche dans une pièce en matériau composite réfractaire.

Un domaine d'application particulier, mais non exclusif, de l'invention est la réalisation de structures en matériau composite réfractaire refroidies par circulation de fluide.

Les matériaux composites réfractaires sont des matériaux comprenant un renfort fibreux, formé de fibres en matière réfractaire, densifié par une matrice également en matière réfractaire. La matière réfractaire constituant les fibres peut être du carbone ou une céramique (par exemple du carbure de silicium). Il en est de même pour la matière constituant la matrice.

La densification du renfort fibreux par la matrice consiste dans le comblement de la porosité initiale du renfort par la matière constitutive de la matrice. Cette densification peut être réalisée par imprégnation du renfort fibreux par un précurseur de la matrice et transformation ultérieure du précurseur ; ainsi une matrice carbone peut être obtenue par imprégnation du renfort fibreux par une résine à taux de coke élevé, réticulation de la résine et pyrolyse. Une autre technique usuelle de densification consiste à réaliser un dépôt ou une infiltration chimique en phase vapeur. A cet effet, le renfort fibreux est placé dans une enceinte dans laquelle est admise une phase gazeuse qui, dans des conditions de température et pressions déterminées provoque un dépôt de la matière constitutive de la matrice sur les fibres du renfort, ce dépôt étant produit par décomposition de la phase gazeuse ou par réaction entre ses constituants au contact des fibres, dans tout le volume du renfort. Ainsi, une matrice en carbone peut être obtenue par décomposition d'un ou plusieurs hydrocarbures gazeux.

Quelle que soit la technique utilisée pour la densification du renfort fibreux, le comblement de la porosité initiale de celui-ci n'est jamais complet. Il subsiste dans le matériau composite une porosité résiduelle.

Les matériaux composites réfractaires sont remarquables par leurs propriétés thermostructurales, c'est-à-dire la combinaison d'une excellente tenue aux efforts mécaniques, qui leur permet de constituer des éléments structuraux, et la capacité de conserver cette tenue mécanique jusqu'à des températures relativement élevées.

Toutefois, un refroidissement actif de pièces en matériau composite réfractaire doit être envisagé pour des utilisations à de très hautes températures (par exemple au-delà de 1700°C) pendant des durées relativement longues.

Ainsi, pour réaliser une protection thermique d'un déflecteur d'une enceinte toroïdale utilisée pour le confinement électromagnétique d'un plasma, il a été proposé de fixer des briques en matériau composite carbone/carbone ou C/C (renfort en fibres de carbone et matrice en carbone) sur des tubes métalliques dans lesquels circule un fluide de refroidissement. Les briques en matériau composite C/C assurent la protection thermique tandis que les tubes métalliques constituent à la fois le circuit du fluide de refroidissement et la structure donnant la tenue mécanique de l'ensemble. L'utilisation de matériaux différents, d'une part un matériau composite réfractaire, d'autre part un matériau métallique, soulève des difficultés en raison des dilatations différentielles entre ces matériaux.

Pour la même application, il est décrit dans le brevet US 5 023 043 (correspondant à EP 0 181 385) une structure de protection thermique formée d'éléments en graphite présentant des logements dans lesquels sont brasés des tubes métalliques permettant la circulation d'un fluide de refroidissement. Les tubes métalliques assurent la tenue mécanique de la structure, le graphite ne pouvant remplir une telle fonction. Les tubes sont en un matériau, tel le molybdène, ayant un coefficient de dilatation thermique voisin de celui du graphite, et sont dimensionnés de manière à ne pas subir de déformation en cours d'utilisation.

Dans les systèmes de protection thermique de l'art antérieur évoqués ci-avant, la fonction de protection thermique est assurée par le matériau composite C/C ou par le graphite, tandis que la fonction structurale est assurée par les tubes métalliques du circuit de refroidissement.

Les propriétés des matériaux composites réfractaires permettent d'envisager la réalisation d'une structure de protection thermique dans laquelle ils assurent à la fois la fonction structurale et la fonction de protection thermique, le refroidissement étant réalisé par circulation d'un fluide dans des canaux formés dans le matériau composite. Il se pose alors un évident problème d'étanchéité en raison de la porosité résiduelle dans le matériau composite.

Aussi, la présente invention a pour but de fournir un procédé permettant la réalisation d'un passage étanche dans une pièce en matériau composite réfractaire.

La présente invention a également pour but de fournir une s:ructure de protection thermique en matériau composite réfractaire pouvant être refroidie par un fluide de refroidissement circulant dans au moins un passage formé dans la structure.

Selon l'invention, la formation d'un passage étanche dans un pièce en matériau composite réfractaire comprend les étapes suivantes :
- insertion, dans un trou de la pièce, d'une garniture tubulaire métallique avec interposition d'une brasure, et
- chauffage pour effectuer le brasage de la garniture métallique sur la paroi du trou et définir ainsi un passage étanche, la garniture métallique étant plastiquement déformable dans les conditions d'utilisation de la pièce de sorte que des dilatations différentielles d'origine thermique entre le matériau composite réfractaire et la garniture métallique peuvent être compensées par déformation plastique de cette dernière.

Ce procédé permet de réaliser de façon très simple et peu coûteuse une structure en matériau composite réfractaire refroidie par circulation d'un fluide de refroidissement au sein de la structure.

Par rapport aux solutions de l'art antérieur, le métal n'est utilisé qu'en tant que barrière étanche garnissant les passages où circule le fluide de refroidissement. Ainsi, alors que, dans le système du brevet US 5 023 043, ce sont les tubes métalliques qui assurent la fonction structurale et ne doivent donc pas pouvoir se déformer en cours d'utilisation, dans la présente invention, c'est le matériau composite réfractaire qui assure la fonction structurale, en plus de la fonction de protection thermique, et les garnitures métalliques, qui n'assurent pas de fonction structurale, doivent pouvoir se déformer plastiquement pour compenser les dilatations différentielles.

En outre, l'invention permet de réaliser une économie de poids importante, la densité du matériau composite étant bien inférieure à celle du métal. De plus, les déformations d'origine thermique sont moindres avec une structure portante en matériau composite réfractaire qu'avec une structure portante en métal. A titre d'exemple, le coefficient de dilatation thermique d'un matériau composite C/C est environ 10 fois inférieur à celui du cuivre.

Un mode particulier de réalisation de l'invention est décrit ci-après à titre indicatif mais non limitatif. Il sera fait référence aux dessins annexés sur lesquels :
- les figures 1 et 3 illustrent les étapes de réalisation d'un passage étanche dans une pièce en matériau composite réfractaire suivant un procédé conforme à l'invention ;
- la figure 4 est une vue très schématique en coupe, illustrant partiellement une installation de fusion thermonucléaire contrôlée ;
- la figure 5 montre une structure de protection thermique constituant une partie de la paroi de l'enceinte de la figure 4 ;
- la figure 6 est une vue en élévation et en partie en coupe d'un élément de la structure de protection thermique de la figure 5 ; et
- la figure 7 est une vue partielle en coupe suivant le plan VII-VII de la figure 6.

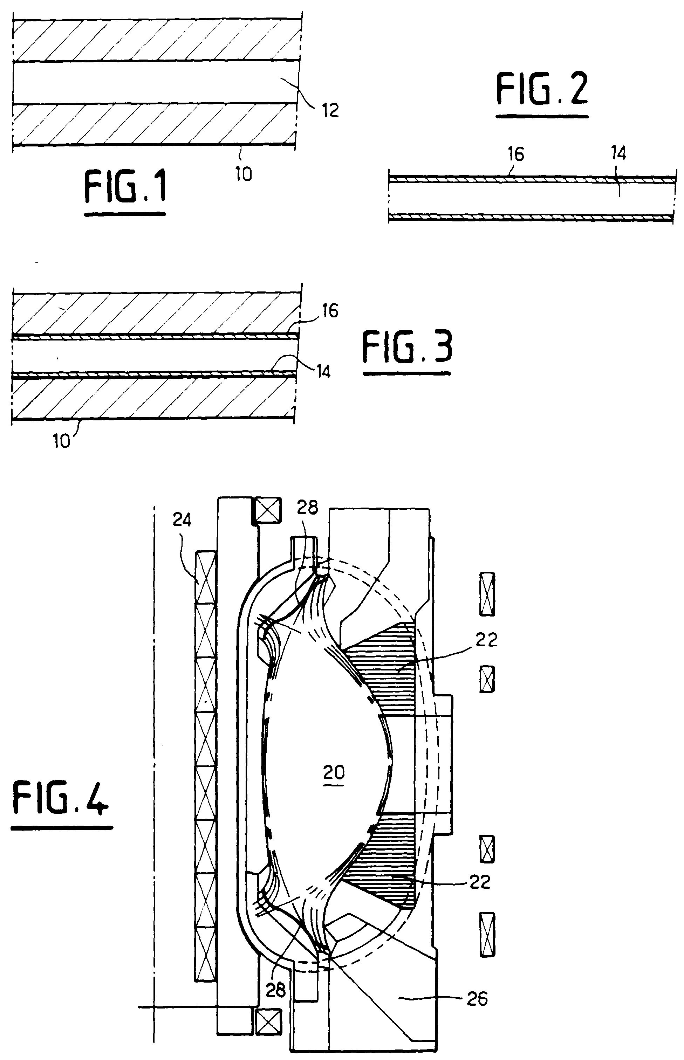

Sur la figure 1, la référence 10 désigne une pièce en matériau composite réfractaire. Un trou 12 est usiné dans la pièce à l'emplacement d'un passage étanche à réaliser dans la pièce 10.

Une garniture tubulaire métallique 14 revêtue sur sa surface extérieure d'une couche uniforme de brasure 16 est introduite dans le trou 12 (figure 2).

L'ensemble est ensuite porté à la température nécessaire au brasage et y est maintenu pendant la durée voulue pour assurer, d'une part, la fusion de la brasure et sa réaction avec le matériau composite et la garniture métallique et, d'autre part, la mise en contact intime de la garniture métallique et de la paroi du trou par dilatation différentielle (figure 3). Une mise en pression interne de la garniture métallique lors du brasage peut être réalisée.

La garniture métallique est en un métal ou un alliage métallique conducteur thermique, tel que le cuivre, le molybdène, ...

Le diamètre de la garniture métallique et son épaisseur sont choisis en particulier pour :
- autoriser l'introduction dans le trou, avec un faible jeu, de la garniture métallique munie de la couche de brasure,
- conserver l'intégrité de la garniture métallique après brasage, et
- assurer la permanence du contact entre le matériau composite réfractaire et la garniture métallique brasée, les dilatations différentielles qui se produisent lors de l'utilisation de la pièce étant compensées par déformation plastique de la garniture métallique.

Ainsi, l'épaisseur de la garniture métallique doit être supérieure à une valeur minimale en deçà de laquelle son intégrité risque d'être détruite par attaque par la brasure ou par la pression du fluide dans le passage. Cette valeur minimale croît lorsque le diamètre de la garniture métallique croît. En outre, l'épaisseur de la garniture métallique doit rester inférieure à une valeur maximale au-delà de laquelle sa plasticité devient insuffisante. Pour une composition métallique donnée, les valeurs minimale et maximale de l'épaisseur de la garniture métallique peuvent être déterminées par l'expérience.

Un passage étanche a été réalisé dans une pièce en matériau composite C/C dans les conditions suivantes.

La pièce en matériau composite est réalisée par densification d'un renfort fibreux formé de couches de tissu de carbone aiguilletées, comme décrit dans la demande de brevet français No 2 584 106. La densification est réalisée, dans un premier temps, par infiltration chimique en phase vapeur, afin de former un dépôt de carbone pyrolytique sur les fibres du renfort, puis par imprégnation par un brai suivie d'une pyrolyse. Le matériau obtenu subit un traitement thermique à haute température (graphitation).

Un trou rectiligne de diamètre 11,6 mm est usiné à travers la pièce, sur toute la longueur de celle-ci (200 mm).

La garniture métallique est constituée par un tube en cuivre doux de 11,3 mm de diamètre extérieur et 10mm de diamètre intérieur (épaisseur 0,65 mm).

Une couche de brasure d'épaisseur 0,1mm est déposée sur le tube en cuivre. On utilise une brasure commercialisée sous la dénomination "Ticusil" par la société des Etats-Unis d'Amérique GTE WESGO, cette brasure ayant une base constituée par un alliage Ti + Cu + Si + Ag.

Après insertion du tube en cuivre revêtu de brasure dans le trou, l'ensemble formé par la pièce en matériau composite et le tube en cuivre est porté à une température de 890°C avec maintien à cette température pendant 5 minutes. En se dilatant, la garniture métallique en cuivre s'applique contre la paroi du trou et en épouse la forme.

Après refroidissement, on constate que le trou est totalement gainé par le cuivre en contact intime avec le matériau composite réfractaire, réalisant ainsi un passage parfaitement étanche. Il est constaté que la garniture métallique conserve toute son intégrité. Différents essais ont montré que, pour un tube en cuivre doux du même diamètre extérieur que ci-dessus (11,3 mm), l'épaisseur de paroi du tube doit au moins être égale à 0,5 mm, faute de quoi des défauts locaux d'intégrité de la garniture métallique sont très probables, et doit être au plus égale à 1 mm, faute de quoi la plasticité insuffisante risque de se traduire par des défauts locaux de liaison avec la paroi du trou.

Un élément de protection thermique de 200 mm de long, avec un passage étanche de 10 mm de diamètre, réalisé comme décrit ci-avant, a été testé au canon à électrons sous des flux thermiques élevés. Après 300 cycles au cours desquels l'élément a été soumis à des flux thermiques uniformes de 11 MW/m2 et à des flux pulsés de 34 MW/m2, l'élément s'avère toujours apte à remplir sa fonction.

Bien entendu, plusieurs passages étanches pourraient être formés de la même manière dans la même pièce. En outre, il est possible de réaliser des passages étanches non pas rectilignes, mais courbes.

Pour la formation d'un passage étanche, il est envisagé ci-dessus d'usiner d'abord un trou dans la pièce en matériau composite. Il est toutefois possible de réserver le trou lors de la fabrication de la pièce. Il est également envisageable de réaliser la pièce en deux parties présentant chacune une gorge pour former un trou par rapprochement des deux parties.

Le procédé de formation de passages étanches permet de réaliser des structures en matériau composite réfractaire refroidies par circulation d'un fluide. De telles structures sont utilisables notamment pour des parois de chambre de combustion de moteurs combinés, ou pour des parties de structures aérodynamiques d'avions spatiaux hypersoniques, notamment la pointe avant (nez), les bords d'attaque de voilure et la carène de prise d'air.

Une autre application est la réalisation de structures de protection thermique pour des environnements à très haute température, par exemple une chambre de confinement électromagnétique de plasma dans une enceinte toroïdale destinée à la fusion thermonucléaire contrôlée.

La figure 4 est une vue très schématique en coupe d'une telle enceinte.

La chambre de confinement 20 est entourée par des bobines d'induction 22, 24 et est reliée à une source de vide par un conduit 26.

La paroi interne de la chambre 20 est revêtue d'une protection thermique. En parties inférieure et supérieure de la chambre, chaque portion de la paroi interne formant déflecteur 28 est une zone particulièrement sollicitée. En effet, comme le montre la figure 4, les lignes de champ électromagnétique se croisent dans cette région. Le confinement est moins intense, de sorte que le déflecteur est soumis à des flux thermiques très élevés. La protection thermique, au niveau de chaque déflecteur a pour fonction de protéger la paroi de la chambre. La température en surface de la protection thermique ne doit toutefois pas excéder environ 1000°C à 1200°C pour éviter une pollution du plasma par sublimation du matériau de la protection. Cest pourquoi cette protection thermique est avantageusement constituée par une structure en matériau composite réfractaire refroidie par circulation d'un fluide.

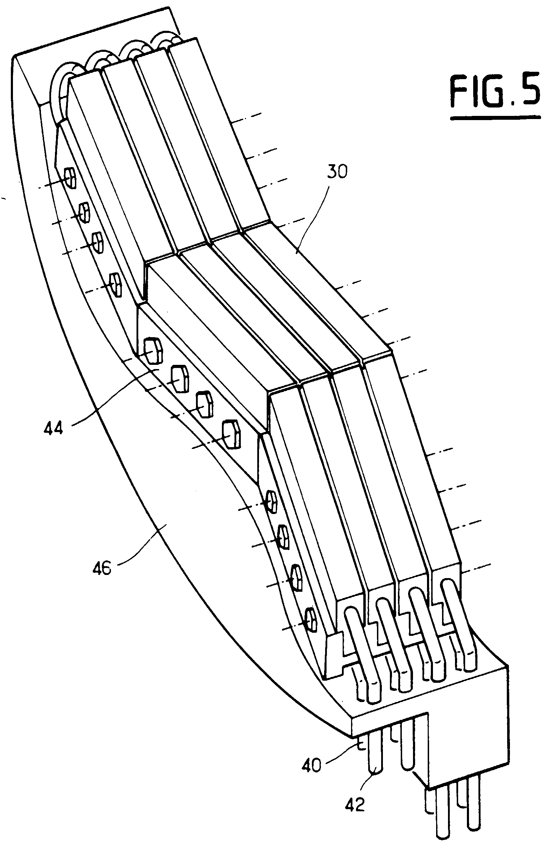

La figure 5 est une vue partielle à échelle plus agrandie de la protection thermique d'un des déflecteurs 28. Celle-ci est formée d'éléments unitaires identiques 30 dans chacun desquels est formé un passage pour la circulation d'un fluide de refroidissement. Ces passages sont reliés à des canalisations 40, 42 d'amenée et d'évacuation du fluide de refroidissement, celui-ci étant par exemple de l'eau à 150 °C sous une pression de 3 à 5 MPa (30 à 50 bars).

Dans l'exemple illustré, les éléments 30 sont disposés en plusieurs lignes brisées qui épousent le profil de la paroi de la chambre. Le fluide de refroidissement est amené à une extrémité de chaque ligne et évacué à l'extrémité opposée. Les éléments 30 sont montés sur une structure métallique de support 44 solidaire de la paroi 46 de la chambre.

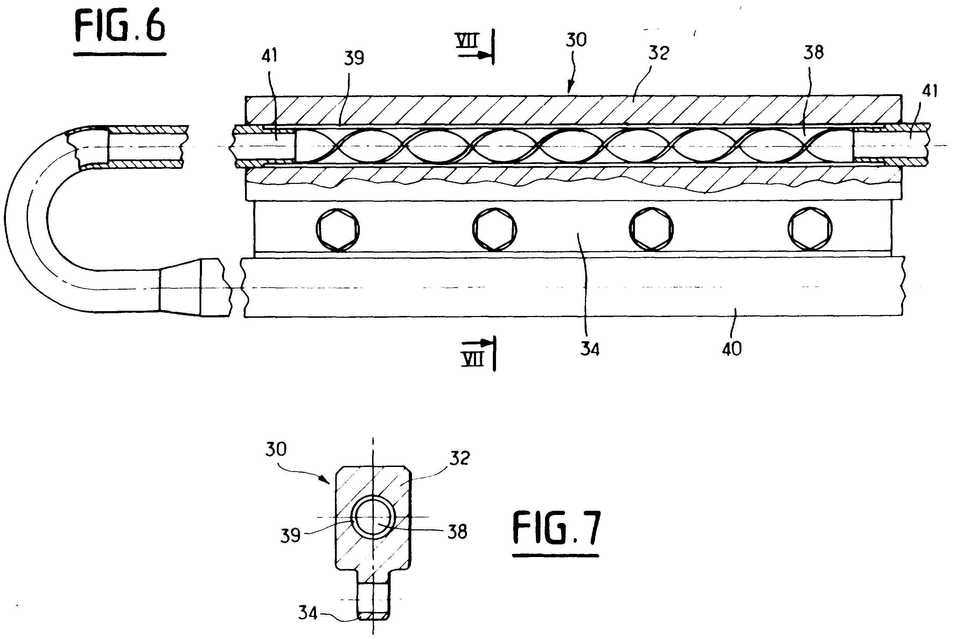

Un élément 30 est représenté par les figures 6 et 7. Il est formé par un profilé 32 en matériau composite réfractaire par exemple de type C/C. A sa base, le profilé 32 présente une nervure de fixation 34 percée de trous 36 pour le montage du profilé par des systèmes vis-écrous sur la structure de support. Un passage étanche longitudinal 38 est formé dans le profilé 32 comme décrit plus haut en référence aux figures 1 à 3, l'étanchéité étant apportée par brasage d'une garniture métallique en cuivre 39. Le passage 38 est raccordé à une canalisation 40 ou 42 ou au passage étanche d'un élément voisin par des raccords 41 soudés aux extrémités de la garniture métallique 38.

Les raccords 41 sont en cuivre, le même matériau que la garniture 39, et sont reliés à celle-ci, aux extrémités du passage 38, par soudure par bombardement électronique. Les canalisations 40, 42 sont des tubes en acier inoxydable soudés par friction aux raccords en cuivre 41.

## Revendications

1. Procédé pour la formation d'un passage étanche (12) dans une pièce en matériau composite réfractaire (10) comprenant un renfort formé de fibres en matière réfractaire densifié par une matrice en matière réfractaire, caractérisé en ce qu'il comprend les étapes suivantes :
- insertion, dans un trou de la pièce, d'une garniture tubulaire métallique avec interposition d'un brasure, et
- chauffage pour effectuer le brasage de la garniture métallique sur la paroi du trou, et définir ainsi un passage étanche, la garniture métallique étant choisie pour être plastiquement déformable, sans perdre son intégrité, dans les conditions d'utilisation de la pièce, de sorte que des dilatations différentielles d'origine thermique entre le matériau composite réfractaire et la garniture métallique peuvent être compensées par déformation plastique de cette dernière, tandis que la tenue mécanique de la pièce est assurée par le matériau composite réfractaire.

2. Procédé selon la revendication 1, caractérisé en ce que la pièce est réalisée en deux parties présentant chacune une gorge pour former ledit trou par réunion desdites parties.

3. Structure en matériau composite réfractaire comprenant un renfort formé de fibres en matière réfractaire densifié par une matrice en matière réfractaire, laquelle structure est susceptible d'être refroidie par circulation de fluide, caractérisée en ce qu'elle comprend au moins un élément (10) qui présente un passage interne (12) dont la paroi est rendue étanche par une garniture métallique (14) brasée sur le matériau composite réfractaire, pour permettre la circulation d'un fluide de refroidissement dans le passage, la garniture métallique étant choisie pour être plastiquement déformable sans perdre son intégrité dans les conditions d'utilisation de la pièce, de sorte que des dilatations différentielles d'origine thermique entre le matériau composite réfractaire et la garniture métallique peuvent être compensées par déformation plastique de cette dernière, tandis que la tenue mécanique de la structure est assurée par le matériau composite réfractaire.

4. Structure de protection thermique refroidie par circulation d'un fluide de refroidissement pour un déflecteur d'une chambre de confinement électromagnétique d'un plasma dans une installation de fusion thermonucléaire contrôlée, ladite structure étant constituée d'une pluralité d'éléments (30) en matériau réfractaire reliés par brasage à des conduits métalliques (39) auxquels sont raccordées des canalisations (40, 42) d'amenée et d'évacuation d'un fluide de refroidissement,
structure caractérisée en ce que lesdits éléments (30) sont en matériau composite réfractaire comprenant un renfort formé de fibres en matière réfractaire densifié par une matrice en matière réfractaire, et présentent chacun un passage interne (38) dont la paroi est rendue étanche par une garniture métallique (39) brasée sur le matériau composite réfractaire, la garniture métallique étant choisie pour être plastiquement déformable sans perdre son intégrité dans les conditions d'utilisation de la structure, de sorte que des dilatations différentielles d'origine thermique entre le matériau composite réfractaire et la garniture métallique peuvent être compensées par déformation plastique de cette dernière tandis que la tenue mécanique de la structure est assurée par le matériau composite réfractaire.

5. Structure selon la revendication 4, caractérisée en ce qu'elle comprend une pluralité d'éléments unitaires identiques (30) disposés en plusieurs lignes qui épousent sensiblement le profil de la paroi de la chambre de confinement.

6. Structure selon l'une quelconque des revendications 3 à 5, caractérisée en ce que chaque élément (10;30) est sous forme d'un profilé en matériau composite réfractaire muni d'un passage longitudinal (12 ; 38).

7. Structure selon la revendication 6, caractérisé en ce que le profilé est rectiligne.

8. Structure selon l'une quelconque des revendications 3 à 6, caractérisée en ce que le ou chaque passage est courbe.

9. Structure selon l'une quelconque des revendications 3 à 8, caractérisée en ce que la garniture métallique est en cuivre doux.

10. Structure selon la revendication 4, caractérisée en ce que les garnitures (39) sont en cuivre doux et sont reliées aux canalisations (40;42) d'amenée et d'évacuation du fluide de refroidissement au moyen de raccords tubulaires en cuivre (41) soudés aux garnitures et aux canalisations.

## Patentansprüche

1. Verfahren zum Herstellen eines dichten Durchgangs (12) in einem Teil aus feuerfestem Verbundstoff, das eine aus feuerfesten Fasern gebildete Verstärkung, die mittels einer aus feuerfestem Material bestehenden Matrix verdichtet ist, aufweist,
**dadurch gekennzeichnet**,
daß es folgende Schritte aufweist:
- in eine Bohrung des Teils wird ein metallischer, rohrförmiger Einsatz mit einem dazwischen befindlichen Lot eingeführt, und
- es erfolgt ein Erhitzen zum Bewirken des Lötens des metallischen Einsatzes an der Bohrungswand, und um so einen dichten Durchgang zu bilden, wobei der metallische Einsatz derart gewählt ist, daß er, ohne seine Unversehrtheit einzubüßen, unter den Einsatzbedingungen des Teils plastisch verformbar ist, derart, daß thermisch verursachte differenzielle Wärmedehnungen zwischen dem feuerfesten Verbundstoff und dem metallischen Einsatz kompensiert werden können durch dessen plastische Verformung, während die mechanische Festigkeit des Teils durch den feuerfesten Verbundstoff gewährleitet wird.

2. Verfahren nach Anspruch 1,
**dadurch gekennnzeichnet**,
daß das Teil aus zwei Bestandteilen gebildet ist, die jeweils eine Rille aufweisen, um durch Zusammenfügen der Bestandteile die Bohrung zu bilden.

3. Feuerfeste Verbundstoffstruktur, umfassend eine Verstärkung, die gebildet wird durch Fasern aus feuerfestem Material, und die mittels einer Matrix aus feuerfestem Material verdichtet ist, wobei die Struktur durch Fluidumlauf kühlbar ist,
**dadurch gekennzeichnet**,
daß sie mindestens ein Element (10) aufweist, welches einen inneren Durchgang (12) aufweist, dessen Wand mit Hilfe eines metallischen Einsatzes (14) abgedichtet ist, welcher auf den feuerfesten Verbundstoff aufgelötet ist, um den Umlauf eines Kühlfluids in dem Durchgang zu ermöglichen, wobei der metallische Einsatz derart gewählt ist, daß er, ohne seine Unversehrtheit einzubüßen, unter den Einsatzbedingungen des Teils plastisch verformbar ist, derart, daß thermisch verursachte differenzielle Wärmedehnungen zwischen dem feuerfesten Verbundstoff und dem metallischen Einsatz kompensiert werden können durch dessen elastische Verformung, während die mechanische Festigkeit der Struktur durch den feuerfesten Verbundstoff gewährleistet wird.

4. Durch Kühlfluidumlauf gekühlte Wärmeschutzvorrichtung für einen Deflektor einer elektromagnetischen Plasma-Hüllkammer in einer Anlage für gesteuerte Kernfusion, wobei die Vorrichtung gebildet wird durch mehrere Elemente (30) aus feuerfestem Material, die durch Löten mit metallischen Leitungen (39) verbunden sind, an die Kanäle (40,42) für den Zulauf und den Ablauf eines Kühlfluids angeschlossen sind,
**dadurch gekennzeichnet**,
daß die Elemente (30) aus feuerfestem Verbundstoff bestehen, der eine aus feuerfesten Fasern gebildete Verstärkung, die mittels einer aus feuerfestem Material bestehenden Matrix verdichtet ist, aufweist, und die jeweils einen inneren Durchgang (38) enthalten, deren Wand mit Hilfe eines metallischen Einsatzes (39) abgedichtet ist, welcher auf den feuerfesten Verbundstoff gelötet ist, wobei der metallische Einsatz derart gewählt ist, daß er ohne Einbüßung seiner Unversehrtheit unter den Einsatzbedingungen der Vorrichtung plastisch verformbar ist, derart, daß thermisch bedingte differenzielle Wärmedehnungen zwischen dem feuerfesten Verbundstoff und dem metallischen Einsatz kompensiert werden können durch dessen plastische Verformung, während die mechanische Festigkeit der Vorrichtung durch den feuerfesten Verbundstoff gewährleistet wird.

5. Vorrichtung nach Anspruch 4,
**dadurch gekennzeichnet**,
daß sie mehrere identische Einheitselemente (30) aufweist, die in mehreren Reihen angeordnet ist, welche etwa dem Profil der Wand der Hüllkammer folgen.

6. Vorrichtung nach einem der Ansprüche 3 bis 5,
**dadurch gekennzeichnet**,
daß sie jedes Element (10;30) die Form eines Profilteils aus feuerfestem Verbundstoff aufweist, welches mit einem Längskanal (12;38) ausgestattet ist.

7. Vorrichtung nach Anspruch 5,
**dadurch gekennzeichnet**,
daß das Profilteil geradlinig ist.

8. Vorrichtung nach einem der Ansprüche 3 bis 6,
**dadurch gekennzeichnet**,
daß der Kanal oder die Kanäle kurvenförmig sind.

9. Vorrichtung nach einem der Ansprüche 3 bis 8,
**dadurch gekennzeichnet**,
daß der metallische Einsatz aus Weichkupfer besteht.

10. Vorrichtung nach Anspruch 4,
**dadurch gekennzeichnet**,
daß die Einsätze (39) aus Weichkupfer bestehen und mit Kanälen (40;42) für den Zu- und den Ablauf des Kühlfluids mit Rohrverbindern aus Kupfer (41) verbunden sind, die an die Einsätze und die Kanäle angeschweißt sind.

## Claims

1. A method of forming a sealed passage (12) in a part of refractory composite material (10) comprising a reinforcement constituted by fibers of refractory material, densified by a matrix of refractory material, the method being characterized in that it comprises the following steps:
- inserting a tubular metal lining with interposed brazing in a hole in the part; and
- heating to braze the metal lining to the wall of the hole, thereby defining a sealed passage, the metal lining being selected so as to be plastically deformable, without losing its integrity, under the conditions of use of the part such that differential expansion of thermal origin between the refractory composite material and the metal lining can be compensated by plastic deformation of the lining, while the mechanical strength of the part is ensured by the refractory composite material.

2. The method according to claim 1, characterized in that the part is made up of two portions each having a groove for forming said hole when said portions are united.

3. A structure made of refractory composite material, comprising a reinforcement constituted by fibers of refractory material, densified by a matrix of refractory material, said structure being suitable for being cooled by the flow of a fluid, the structure being characterized in that it includes at least one element (10) having an internal passage (12) whose wall is sealed by a metal lining (14) brazed to the refractory composite material so as to enable a cooling fluid to flow along the passage, the metal lining being selected so as to be plastically deformable, without losing its integrity, under the conditions of use of the part such that differential expansion of thermal origin between the refractory composite material and the metal lining can be compensated by plastic deformation of the lining, while the mechanical strength of the part is ensured by the refractory composite material.

4. A thermal protection structure cooled by a flow of a cooling fluid for a deflector in an electromagnetic confinement chamber for a plasma in an installation for controlled thermonuclear fusion, said structure being made up of a plurality of elements (30) of refractory material connected by brazing to metal ducts (39) to which are joined pipework (40, 42) for feeding and removing a cooling fluid,
structure characterized in that said elements (30) are of refractory composite material, comprising a reinforcement constituted by fibers of refractory material, densified by a matrix of refractory material, and each having an internal passage (38) whose wall is sealed by a metal lining (39) brazed to the refractory composite material, the metal lining being selected so as to be plastically deformable, without losing its integrity, under the conditions of use of the structure such that differential expansion of thermal origin between the refractory composite material and the metal lining can be compensated by plastic deformation of the lining, while the mechanical strength of the part is ensured by the refractory composite material.

5. The structure according to claim 4, characterized in that it comprises a plurality of identical unit elements (30) disposed in a plurality of lines that substantially follow the profile of the wall of the confinement chamber.

6. The structure according to any one of claims 3 to 5, characterized in that each element (10; 30) is in the form of a section bar of refractory composite material provided with a longitudinal passage (12; 38).

7. The structure according to claim 6, characterized in that the section bar is rectilinear.

8. The structure according to any one of claims 3 to 6, characterized in that the, or each, passage is curved.

9. The structure according to any one of claims 3 to 8, characterized in that the metal lining is made of soft copper.

10. The structure according to claim 4, characterized in that the linings (39) are of soft copper and are joined to the pipework (40; 42) for feeding and removing the cooling fluid by means of tubular copper couplings (41) welded to the linings and to the pipework.
